(19) Europäisches Patentamt
European Patent Office
Office européen des brevets

(11) **EP 4 233 160 B1**

(12) **EUROPÄISCHE PATENTSCHRIFT**

(45) Veröffentlichungstag und Bekanntmachung des Hinweises auf die Patenterteilung:
**29.07.2026   Patentblatt 2026/31**

(21) Anmeldenummer: **21805362.7**

(22) Anmeldetag: **26.10.2021**

(51) Internationale Patentklassifikation (IPC):
**H02K 15/03** (2025.01)     **H02K 21/24** (2006.01)
**H02K 15/16** (2025.01)     **H02K 5/173** (2006.01)

(52) Gemeinsame Patentklassifikation (CPC):
**H02K 15/03; H02K 5/1732; H02K 15/16; H02K 21/24**

(86) Internationale Anmeldenummer:
**PCT/DE2021/100855**

(87) Internationale Veröffentlichungsnummer:
**WO 2022/089686 (05.05.2022 Gazette 2022/18)**

(54) **ELEKTRISCHE MASCHINENANORDNUNG**

ELECTRICAL MACHINE ARRANGEMENT

AGENCEMENT DE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **26.10.2020   DE 102020128140**

(43) Veröffentlichungstag der Anmeldung:
**30.08.2023   Patentblatt 2023/35**

(73) Patentinhaber: **Schaeffler Technologies AG & Co. KG**
**91074 Herzogenaurach (DE)**

(72) Erfinder:
• **REIMNITZ, Dirk**
**77815 Bühl (DE)**
• **AGNER, Ivo**
**77815 Bühl (DE)**

(74) Vertreter: **Schaeffler Technologies**
**Industriestraße 1-3**
**91074 Herzogenaurach (DE)**

(56) Entgegenhaltungen:
**WO-A2-2013/167670     FR-A3- 3 002 191**

**Beschreibung**

Die vorliegende Erfindung betrifft eine elektrische Maschinenanordnung, umfassend eine elektrische Axialflussmaschine mit einem Stator und mit einem Rotor, sowie eine in drehfestem Kontakt mit dem Rotor stehenden Rotorwelle, wobei der Rotor über zumindest eine Lagerstelle drehbar gelagert innerhalb der elektrischen Maschinenanordnung angeordnet ist. Ferner umfasst die vorliegende Erfindung auch ein Montageverfahren zum axialen Ausrichten zueinander von Baugruppen einer elektrischen Maschinenanordnung.

Bei Elektromotoren kommt es sehr auf die Lage, der vom Magnetfeld durchströmten Teile an. Dies betrifft sowohl die mechanische Struktur des Elektromotors, durch die die Teile zueinander positioniert werden, als auch die genaue Kenntnis über die Winkellage der sich drehenden Teile, über die die genaue aktuelle Position des Rotors relativ zum Stator erfasst wird. Eine exakte steife mechanische Struktur ist wichtig, da bereits geringe Positionsabweichungen der Teile untereinander den magnetischen Fluss (beispielsweise durch veränderte Luftspalte) nennenswert beeinflussen können. Daher ist es wichtig die mechanische Struktur des Elektromotors sehr präzise herzustellen, um die notwendige exakte Ausrichtung der elektrischen oder magnetischen Teile sicherzustellen. Maßabweichungen der vom Magnetfeld durchströmten Komponenten des Elektromotors, egal ob es sich um Formabweichungen oder Lageabweichungen handelt, verschlechtern die Effizienz, die Lebensdauer und/oder die Leistung des Elektromotors. Dieses gilt insbesondere für den speziellen Typus der Axialflussmaschine als besondere Ausführungsform eines Elektromotors.

Der vorliegenden Erfindung liegt die Aufgabe zugrunde, eine Maschinenanordnung mit elektrischer Axialflussmaschine bereitzustellen, bei der der negative Effekt von Bauteiltoleranzen reduziert und eine ausreichend exakte Ausrichtung der Motorbauteile gewährleistet werden kann. Ebenso soll ein geeignetes Montageverfahren für so eine elektrische Maschinenanordnung gefunden werden.

Eine Maschinenanordnung gemäß dem Oberbegriff des Anspruchs 1 ist aus der WO 2013/167670 A2 bekannt.

Bezüglich weiteren Standes der Technik wird auf die FR 3 002 191 A3 verwiesen.

Diese Aufgabe wird gelöst durch eine elektrische Maschinenanordnung mit den Merkmalen des Patentanspruchs 1. Ebenso wird die Erfindung mittels eines Montageverfahrens nach Anspruch 6 oder 10 gelöst.

Die Notwendigkeit, die Bauteile des Elektromotors besonders exakt herzustellen, steht in der praktischen Ausgestaltung von Elektromotoren für Kraftfahrzeuge häufig im Widerspruch zu den im Fahrzeugbau immer bestehenden Anforderungen nach großserientauglichen Fertigungsverfahren, Toleranzunempfindlichkeit und geringen Kosten.

Erfindungsgemäß weist der Stator wenigstens eine erste und eine zweite Statorhälfte auf, welche auf jeweils unterschiedlichen axialen Seiten axial vom Rotor beabstandet sind. Auf diese Weise wird auf beiden axialen Seiten des Rotors ein Luftspalt zwischen dem Rotor und der entsprechenden Statorhälfte gebildet. Erfindungsgemäß ist wenigstens ein Abstandselement zur axialen Ausrichtung wenigstens zweier der Baugruppen: erste Statorhälfte, zweite Statorhälfte und Rotor zueinander vorgesehen. Eine Axialflussmaschine weist als Baugruppen unter anderem den Rotor und einen Stator auf. Ein möglicher Faktor, durch den die Effizienz des Motors beeinfluss wird, ist die Genauigkeit, mit der der Luftspalt zwischen Rotor und Stator eingestellt wird. Da durch die axiale Positionierung des Rotors und jeweils einer Statorhälfte zueinander der Luftspalt der Axialflussmaschine definiert wird, kann durch dieses Abstandselement der Luftspalt auf einfache Weise je nach Anforderung eingestellt werden. Auf diese Weise können Beschädigungen durch einen zu kleinen Luftspalt vermieden werden. Andererseits wird die Effizienz des Motors gesteigert, wenn darauf geachtet wird, dass der Luftspalt nicht zu groß wird.

Es sind auch Axialflussmaschinen mit mehreren Teilrotoren vorstellbar, die jeweils von Teilstatoren axial eingeschlossen werden. An solch einen Teilstator kann wieder ein Teilrotor anschließen. Z.B. können dann alle Teilrotoren auf derselben Rotorwelle angeordnet sein. Bei solch einer Anordnung sind dann zwischen jedem Teilrotor und den axial anschließenden Teilstatoren Luftspalte vorhanden. Durch Abstandselemente können dann alle Luftspalte so eingestellt werden, dass die Axialflussmaschine wie gewünscht funktioniert, d.h. der Arbeitspunkt kann gemäß vorgegebenen Rahmenbedingungen wie Effizienz und Haltbarkeit eingestellt und optimiert werden.

Hierdurch kann besonders einfach eine Verringerung der Toleranzen bei gleichzeitig geringen Kosten und noch durchführbarem Fertigungsverfahren realisiert werden.

Weitere vorteilhafte Ausgestaltungen der Erfindung sind in den abhängig formulierten Ansprüchen angegeben.

Elektrische Maschinen dienen zur Umwandlung elektrischer Energie in mechanische Energie und/oder umgekehrt, und umfassen in der Regel einen als Stator, Ständer oder Anker bezeichneten ortsfesten Teil sowie einen als Rotor oder Läufer bezeichneten und gegenüber dem ortsfesten Teil beweglich angeordneten Teil.

Im Falle von als Rotationsmaschinen ausgebildeten elektrischen Maschinen wird insbesondere zwischen Radialflussmaschinen und Axialflussmaschinen unterschieden. Dabei zeichnet sich eine Radialflussmaschine dadurch aus, dass die Magnetfeldlinien in dem zwischen Rotor und Stator ausgebildeten Luftspalt, sich in radialer Richtung erstrecken, während im Falle einer Axialflussmaschine sich die Magnetfeldlinien in dem zwischen Rotor und Stator gebildeten Luftspalt in axialer Richtung erstrecken.

Die elektrische Maschine wird von einem Gehäuse umhaust. Das Gehäuse kann darüber hinaus auch die Steuer- und Leistungselektronik aufnehmen. Das Gehäuse kann darüber hinaus auch Bestandteil eines Kühlsystems für die elektrische Maschine sein und derart ausgebildet sein, dass Kühlfluid über das Gehäuse der elektrischen Maschine zugeführt werden kann und/oder die Wärme über die Gehäuseflächen nach außen abgeführt werden kann. Darüber hinaus schützt das Gehäuse die elektrische Maschine sowie die ggf. vorhandene Elektronik vor äußeren Einflüssen.

Ein Rotor ist der sich drehende (rotierende) Teil einer elektrischen Maschine. Insbesondere wird von einem Rotor gesprochen, wenn es auch einen Stator gibt. Der Rotor umfasst in der Regel eine Rotorwelle und einen oder mehrere drehfest auf der Rotorwelle angeordnete Rotorkörper, bzw. Teilrotoren. Die Rotorwelle kann auch hohl ausgeführt sein, was zum einen eine Gewichtsersparnis zur Folge hat und was zum anderen die Zufuhr von Schmier- oder Kühlmittel zum Rotorkörper erlaubt. Wenn die Rotorwelle hohl ausgeführt ist, können auch Bauteile, beispielsweise Wellen, von benachbarten Aggregaten in den Rotor hinein oder durch den Rotor hindurch ragen, ohne die Funktionsweise der elektrischen Maschine negativ zu beeinflussen. Die Rotorwelle selber kann auch aus mehreren Teilrotorwellen bestehen.

Wenn von einer axialen Richtung oder einer axialen Beabstandung gesprochen wird, so wird sich hierbei immer auf die Drehachse des Motors, d.h. auf die Drehachse des Rotors bezogen. Gleiches gilt bei der Verwendung der Begriffe radial oder tangential, bzw. umfänglich oder ähnlich.

Der Rotor umfasst, ebenso wie der Stator Wicklungen und/oder Permanentmagnete. Bei einer Axialflussmaschine weisen Rotor und Stator jeweils Stirnflächen auf, die einen abgeschlossenen Bereich jeweils axial begrenzen. Die Statoroberfläche, bzw. Rotorfläche können insbesondere deckelförmig ausgebildet sein und so direkt eine Stirnfläche des Rotors oder Stators bzw. einer Statorhälfte bilden. Es kann aber auch sein, dass es sich hierbei um Flächen handelt, die nur zur Veranschaulichung der axialen Endbereiche des Stators und Rotors, bzw. der Statorhälften dienen.

Als Luftspalt wird der zwischen dem Rotor und dem Stator existierende Spalt bezeichnet. Es handelt sich dabei um den Spalt zwischen einer Stirnfläche des Rotors und der Stirnfläche eines Stators. Dieses gilt auch, wenn weder Stator noch Rotor durch einen Deckel abgeschlossen oder vergossen sind, sondern Magnete / Elektromagnete offen und ohne Abdeckung vorliegen.

Der magnetische Fluss ist in einer elektrischen Axialflussmaschine, parallel zur Rotationsachse der elektrischen Maschine gerichtet. Der gebildete Luftspalt bei einer Axialflussmaschine ist somit im Wesentlichen ringscheibenförmig um die Rotationsachse herum ausgebildet.

Axialflussmaschinen werden unter anderem mit Blick auf Ihren Aufbau unterschieden in Axialflussmaschinen in I-Anordnung und in Axialflussmaschinen in H-Anordnung. Unter einer Axialflussmaschine in I-Anordnung wird eine elektrische Maschine verstanden, bei der eine einzelne Rotorscheibe der elektrischen Maschine zwischen zwei Statorhälften eines Stators der elektrischen Maschine angeordnet und über diese mit einem elektromagnetischen Drehfeld beaufschlagbar ist. Unter einer Axialflussmaschine in H-Anordnung wird eine elektrische Maschine verstanden, bei der zwei Rotorscheiben eines Rotors der elektrischen Maschine in dem axial zwischen sich befindlichen Ringraum einen Stator der elektrischen Maschine aufnehmen, über den die beiden Rotorscheiben mit einem elektromagnetischen Drehfeld beaufschlagbar sind. Die beiden Rotorscheiben einer elektrischen Maschine in H-Anordnung sind mechanisch miteinander verbunden. Dies erfolgt meistens über eine (Rotor-)Welle oder ein wellenähnliches Verbindungselement, das radial innen (radial innerhalb der Magnete der elektrischen Maschine) durch den Stator hindurchragt und die beiden Rotorscheiben radial innen miteinander verbindet. Eine Sonderform der H-Anordnung stellen elektrische Maschinen da, deren beide Rotorscheiben radial außen (radial außerhalb der Magnete der elektrischen Maschine) miteinander verbunden sind. Der Stator dieser elektrischen Maschine wird dann radial innen (meisten einseitig) an einer die elektrische Maschine abstützenden Komponente befestigt. Diese Sonderform der H-Anordnung wird auch als J-Anordnung bezeichnet.

Erfindungsgemäß ist auch vorgesehen, dass die Lagerung eine erste Lagerstelle und eine von der ersten Lagerstelle axial beabstandete zweite Lagerstelle aufweist. Es kann hierdurch eine Verbesserung der Kippstabilität erreicht werden. Es sind dann insbesondere beide Statorhälften über die beiden Lagerstellen an der Rotorwelle gelagert. Auf diese Weise kann die axiale Ausrichtung zumindest einer der Statorhälften mittels wenigstens eines Abstandselements festgelegt werden.

Das Abstandselement kann dafür an irgendeiner Position vorgesehen sein, die in einer axialen Kette zwischen einer der Statorhälften und dem Rotor liegt. Es können auch mehrere Abstandselemente, sowohl an einer Position hintereinander oder auch an verschiedenen Positionen innerhalb der axialen Kette vorgesehen sein. Auf diese Weise kann die Positionierung von Statorhälften und Rotor möglichst exakt zueinander erfolgen und auch einfach realisiert werden.

Gemäß einer weiteren Ausführungsform kann es vorgesehen sein, dass der Rotor über zumindest eine Lagerung mittels zumindest einer ersten Lagerstelle gegenüber der den Stator abstützenden Komponente gelagert ist. Indem der Rotor an einer den Stator abstützenden Komponente abgestützt ist und nicht direkt über eine Lagerstelle mit dem Stator verbunden ist, werden die mechanischen Belastungen reduziert, die auf die Struktur des Stators einwirken. Dies ermöglicht ein kostengünstigeres Design des Stators oder ermöglicht es, das Stator-Design noch stärker hinsichtlich der magnetischen Eigenschaften der elektrischen Maschine zu optimieren und deren Effizienz zu optimieren.

In einer weiteren Ausführungsform kann vorgesehen sein, dass das Abstandselement axial zwischen der wenigstens einen Lagerstelle und dem Rotor oder axial zwischen der wenigstens einen Lagerstelle und einer der zwei Statorhälften angeordnet ist. An diesen Stellen kann auf einfache Art und Weise auch eine Aufnahme für das Abstandselement vorgesehen sein. Insbesondere können auch mehrere Abstandselemente an unterschiedlichen dieser Positionen vorgesehen sein.

Bei diesen Ausführungsformen kann es vorgesehen sein, dass das Abstandselement eine Einstellscheibe ist, welche an einer axialen Stirnseite eines Lagerinnenrings oder Lageraußenrings einer der Lagerstellen angeordnet ist.

Allgemein kann auch ein Vorgesehen sein, welches zusätzlich zur elektrischen Maschinenanordnung noch eine Vielzahl Abstandselemente, insbesondere Einstellscheiben aufweist. Zur Einstellung einer axialen Position, bzw. zum axialen Ausrichten Statorhälften und des Rotors zueinander können dann aus dieser Vielzahl von Abstandselementen eine geeignete Anzahl von gleichdicken Abstandselementen oder auch von Abstandselementen mit unterschiedlichen Dicken ausgewählt werden.

Alternativ oder zusätzlich kann es auch vorgesehen sein, dass es sich bei dem Abstandselement um einen radialen Bereich eines weiteren Bauteils, wie z.B. einer Hülse handelt. Insbesondere können Hülsen mit radialen Bereichen unterschiedlicher Breite bereitgestellt sein, so dass eine geeignete Hülse auswählbar ist. Die Hülse weist dabei z.B. einen axial verlaufenden Abschnitt, welcher z.B. einen Lageraußenring radial übergreift auf, und einen daran anschließenden radialen Bereich mit einer vorgegebenen axialen Ausdehnung/-Breite. Der radiale Bereich verläuft in radialer Richtung und liegt dann axial zwischen entsprechenden Flächen z.B. des Stators und eiens Lageraußenrings oder des Rotors und eines Lagerinnenrings, bzw. Rotorträger und Lagerinnenring.

Weiterhin kann vorgesehen sein, dass die erste Statorhälfte axial relativ zur zweiten Statorhälfte mittels eines Abstandselements ausgerichtet wird. Das Abstandselement ist dabei axial zwischen diesen beiden Statorhälften angeordnet, so dass jeweils Stirnflächen beider Statorhälften axial an das Abstandselement stoßen. Insbesondere kann auch vorgesehen sein, dass dieses Abstandselement im eingebauten Zustand radial außerhalb des Rotors und bevorzugt axial geschachtelt mit ihm angeordnet ist. Ist das Abstandselement radial außerhalb des Rotors angeordnet, so sind auch nicht axial geschachtelte Positionen möglich. Auf diese Weise wird in einem Montageverfahren eine einfache, letzte Positionierung der beiden Statorhälften zueinander, bzw. eine schlüssige Verbindung der Statorhälften miteinander erreicht. Als Abstandselement kommt hier eine Einstellscheibe, ein Einstellring, ein radialer Hülsenabschnitt einer Hülse oder auch eine Abstandshülse in Frage. Insbesondere kann auch ein variabel auf den Ist-Abstand der beiden Statorhälften zueinander abstimmbares Abstandselement vorgesehen sein.

Weiter wird die Aufgabe der Erfindung durch ein Montageverfahren zum axialen Ausrichten von Baugruppen zueinander in einer elektrischen Maschinenanordnung wie oben beschrieben nach Anspruch 6 oder 10 gelöst.

Es werden zunächst zwei Stirnflächen zweier Baugruppen ausgewählt, so dass insgesamt vier Stirnflächen ausgewählt sind. Zu jeweils zweien dieser Stirnflächen, die derselben Baugruppe zugeordnet sind, werden die Ist-Abstände dieser Stirnflächen zueinander bestimmt. Diese Ist-Abstände werden dann mit hinterlegten, d.h. vorgegebenen Soll-Abständen verglichen, so dass für jedes vermessene Stirnflächenpaar eine Abweichung des Ist-Abstandes vom Soll-Abstand ermittelt wird. Für jede der beiden Baugruppen wird dadurch eine Abweichung ermittelt. Auf Basis der so ermittelten beiden Abweichungen wird dann wenigstens ein Abstandselement mit einer durch den Soll-Ist-Vergleich vorgegebenen Dicke ausgewählt und zur Ausrichtung der beiden Baugruppen zueinander verwendet.

Es können eine Vielzahl Abstandselemente mit unterschiedlichen Dicken hinterlegt sein. Zur Ausrichtung der beiden Baugruppen können dann auch mehrere Abstandselemente verwendet werden, die dann eine notwendige Gesamtdicke erreichen. Diese mehreren Abstandselemente können dabei gleiche oder unterschiedliche Dicken aufweisen.

Die Baugruppen können sein: eine erste Statorhälfte, eine zweite Statorhälfte oder ein Rotor der elektrischen Maschinenanordnung. Auf diese Weise können jeweils zwei der Baugruppen zueinander ausgerichtet werden. So kann die erste Statorhälfte zunächst zum Rotor ausgerichtet werden. Anschließend kann dann die zweite Statorhälfte zu diesem Zusammenbau aus Rotor und erster Statorhälfte ausgerichtet werden, so dass die Luftspalte auf beiden axialen Seiten des Rotors zu den jeweiligen Statorhälften eingestellt werden können.

In einem abschließenden Schritt können dann auch noch die Statorhälften zueinander ausgerichtet werden, wobei der Bezug zum Rotor nicht aufgegeben werden darf.

Als auszuwählende Stirnflächen stehen unterschiedliche Flächen der Baugruppen zur Verfügung, wobei diese Flächen alle im Wesentlichen zumindest paarweise parallel zueinander sein sollen, so dass eine axiale Abweichung bestimmt werden kann. Insbesondere sollen die Stirnfläche so ausgewählt werden, dass alle Stirnflächen im verbauten Zustand im Wesentlichen parallel zueinander ausgerichtet sind.

Auf diese Weise bilden die Abweichungen eine in axialer Richtung kumulative Kette, die an einer oder mehreren Positionen im Zusammenbau der Baugruppen miteinander ausgeglichen werden können. Bei den Stirnflächen kann es sich um Flächen an unterschiedlichen Elementen handeln, die den einzelnen Baugruppen zugeordnet sein können. Es kann sich dabei insbesondere um eine Stirnfläche eines Elementes aus der Gruppe Lagerstelle, Lagerinnenring, Lageraußenring, Rotorwelle, Statorring, Rotormagnete, Rotormagneteabdeckung, Statormagnete und Statormagneteabdeckung handeln.

Als Stirnflächen kommen verschiedene Flächen, wie z.B. Gehäuseteile, Abschlussteile, eine Abschlussebene von Magneten oder Schultern an Wellen oder Ringen oder direkt die axiale Stirnfläche eines Lager-Innen- oder -Außenrings in Frage.

Um die Abweichungen von zwei Bauteilen, die axial zueinander ausgerichtet werden sollen auf einfache Weise wenigstens zu reduzieren ist es in einer Weiterbildung vorgesehen, dass das Abstandselement zwischen zwei axial benachbarten Stirnflächen der beiden Baugruppen eingesetzt wird. Auf diese Weise kann insbesondere ein Luftspalt zwischen den Baugruppen eingestellt werden.

Die Dicke des Abstandselements kann geeignet sein, die Abweichungen in Summe auf Null zu reduzieren, wenn es an einer geeigneten Stelle angeordnet wird. Hierunter kann insbesondere verstanden werden, dass nur ein Abstandselement verwendet wird, was die Abweichungen beider Baugruppen aufhebt.

Um hier Abweichungen jedweden Vorzeichens aufheben zu können, kann vorgesehen sein, dass der Soll-Abstand so gewählt wird, dass hier ein Abstandselement mittlerer Dicke verwendet werden muss, um eine gewünschte Ausrichtung der zwei Baugruppen zueinander zu ermöglichen. Insbesondere heißt das, dass auch bei keiner Abweichung der Ist-Abstände zu den Soll-Abständen ein Abstandselement verwendet wird. Eine maximal noch korrigierbare Abweichung ist dann auf der einen Seite gerade dadurch gekennzeichnet, dass gerade kein Abstandselement mehr verwendet wird um die gewünschte Ausrichtung zu erreichen. Auf diese Weise können auch Abweichungen vom Soll-Abstand in beide Richtungen korrigiert werden.

Im Folgenden wird ein beispielhaftes Montageverfahren beschrieben:
Um die Luftspalten auf beiden Seiten eines Rotors einzustellen können zunächst auf einer ersten axialen Seite des Rotors zwei Stirnflächen ausgewählt werden. Eine dieser Stirnflächen soll vorteilhafterweise unmittelbar die axiale Position der Rotormagnete des Rotors beschreiben, da der Luftspalt abschließend zwischen den Rotormagneten und den Statormagneten eingestellt werden soll.

Eine erste Stirnfläche des Rotors kann dabei die erste axiale Stirnfläche der Rotormagnete sein. Als zweite Stirnfläche wird dann eine Fläche ausgewählt, die unmittelbar die axiale Position einer Kontaktfläche mit der ersten Statorhälfte im Zusammenbau beschreibt.

Hierzu kann beispielsweise eine Schulter der Rotorwelle ausgewählt werden, an der die erste Statorhälfte im Zusammenbau angelegt wird. Es wird dabei darauf geachtet, dass die vermessenen Stirnflächen im Wesentlichen parallel zu einander ausgerichtet sind.

Mit einem geeigneten Werkzeug kann dann der Abstand der beiden Stirnflächen des Rotors zueinander gemessen werden. Dieser Ist-Abstand kann dann mit einem vorgegebenen Soll-Abstand vermessen und eine Abweichung bestimmt werden. Hierunter kann auch verstanden werden, dass zwei Messungen von einem geeigneten Messbezug aus mit einem Werkzeug erfolgen und eine anschließende Differenzbildung der Messwerte durchgeführt wird.

Auf die gleiche Weise kann auch für zwei Stirnflächen der ersten Statorhälfte eine Abweichung bestimmt werden. Als Stirnflächen sollte zunächst eine Stirnfläche gewählt werden, die unmittelbar eine axiale Position der Statormagnete bestimmt. Hierbei kann es sich bevorzugt um die Stirnfläche der Statormagnete selber oder deren Magnetabdeckung handeln. Die zweite Stirnfläche sollte dann auch hier die axiale Position der Schnittstelle zwischen der ersten Statorhälfte und dem Rotor bestimmen. Ist die erste Statorhälfte über eine Lagerstelle an der Rotorwelle gelagert, so bietet sich hierfür bevorzugt die Stirnfläche des Lagerrings an, welche an die Schulter der Rotorwelle bei der Montage angelegt wird. Bevorzugt ist das die, dem Rotor zugewandte Seite des Lagerinnenrings. Es wird dann der axiale Ist-Abstand von der Stirnfläche der Statormagnete zur Stirnfläche des Lagerinnenrings gemessen. Analog wird dann eine Abweichung dieses Ist-Abstands zum Soll-Abstand bestimmt.

Auf analoge Weise werden die entsprechenden Ist-Abstände auf der axial anderen, zweiten Seite des Rotors ermittelt, welche der zweiten Statorhälfte zugewandt ist.

Die Lagerstelle kann dabei entweder der Baugruppe Rotor oder der Baugruppe erste bzw. zweite Statorhälfte zugeordnet sein. Einer der Ist-Abstände kann je nach Zuordnung dann über eine Stirnfläche des Lageraußenrings zur Stirnfläche der Rotormagnete, eine Stirnfläche des Lagerinnenrings zur Stirnfläche der Rotormagnete, eine Stirnfläche des Lageraußenrings zur Stirnfläche der Statormagnete, oder wie beschrieben über eine Stirnfläche des Lagerinnenrings zur Stirnfläche der Statormagnete ermittelt werden.

Es wird eine Abweichung der Ist- zu den Soll-Abständen auf der ersten und der zweiten axialen Seite des Rotors bestimmt. Abhängig von der ermittelten Abweichung wird für jede Seite bestimmt, welche Dicke ein Abstandselement aufweisen muss, um jeweils die Abweichung zu reduzieren oder möglichst aufzuheben.

Da Toleranzen der axialen Positionen der Stirnflächen in beide Richtungen vorkommen, können sich sowohl positive als auch negative Abweichungen für alle Baugruppen, d.h. Rotor und die beiden Statorhälften ergeben.

Es wird daher ein System vorgeschlagen, welches eine Menge von Abstandselementen und Baugruppen wie oben beschrieben umfasst, welches zur Durchführung des beschriebenen Montageverfahrens geeignet ist. Diese Menge von Abstandselementen umfassen Abstandselemente unterschiedlicher Dicke, bzw. Breite, d.h. axialer Breite, so dass ein möglichst großer Bereich von Abweichungen ausgeglichen werden kann. Es kann dabei vorgesehen sein, dass der Soll-Abstand jeweils so normiert wird, dass ein unteres Extrem, ein oberes Extrem von Abweichungen, sowie eine Null-Abweichung der Ist-Abweichung von der Soll-Abweichung definiert sind, in welchem Bereich Abweichungen durch die Menge von Abstandselementen ausgeglichen werden können. Die maximale Abweichung, d.h. das obere Extrem wird dabei durch ein Abstandselement maximaler vorgegebener Breite ausgeglichen, die Nullabweichung durch ein Abstandselement der halben maximalen Breite und die minimale Abweichung, d.h. das untere Extrem wird durch das Weglassen eines Ablasselements ausgeglichen. Die Breite des Abstandselements, d.h. die axiale Ausdehnung wird also nicht nur von dem Betrag der Abweichung, sondern auch durch sein Vorzeichen bestimmt. Ein negatives Vorzeichen bedeutet dabei eine Breite, die geringer, als die Breite des Abstandselements für die Nullabweichung ist. Ein positives Vorzeichen resultiert dagegen immer in einem breiteren Abstandselement. Die übrigen Abstandselemente bewegen sich dann in Bezug auf ihre Breite, bzw. Dicke in dem Bereich zwischen keinem Abstandselement und Abstandselement der maximalen Bereich. Diese Verteilung ist dann möglich, wenn es sich um statische zufällige Abweichungen um den Sollwert handelt. Liegt eine Verschiebung der Toleranzen in einer Richtung vor, so kann auch eine nicht symmetrische Dicken- bzw. Breitenverteilung der Abstandselemente um die Null-Abweichung herum vorgesehen sein.

Um nun auf der einen oder anderen Seite des Rotors die ermittelte Abweichung auszugleichen, wird ein Abstandselement axial zwischen einem Lagerinnenring und einer Schulter der Rotorwelle vorgesehen. Alternativ oder zusätzlich können auch Abstandselemente axial zwischen einem Lageraußenring und einem Statorträger, welcher auch als Statorflansch ausgebildet sein kann vorgesehen sein. Insbesondere ist ein Abstandselement mittlerer Dicke vorgesehen, wenn der Ist-Abstand gerade dem Soll-Abstand entspricht, d.h. bei einer Null-Abweichung.

Die notwendige Dicke der Abstandselemente kann alternativ auch durch die Verwendung mehrerer Abstandselemente insbesondere an unterschiedlichen Punkten erreicht werden. Es ist sozusagen eine "Reihenschaltung" der Abstandselemente möglich. Beispielsweise um sowohl den Rotor als auch den Stator jeweils auf "0" zu shimmen oder um aus mehreren Abstandselementen die richtige Gesamtdicke zu wählen.

Auf diese Weise werden die beiden Statorhälften so in Bezug auf den Rotor ausgerichtet, dass sich Luftspalte einer gewünschten Breite zwischen den Rotormagneten und Statormagneten ergeben.

Abschließend wird dann noch ein weiteres Abstandselement im axialen Bereich zwischen den Statorhälften vorgesehen, so dass sich auch hier eine axiale Schnittstelle zwischen den Statorhälften einstellt. Hierfür wird jeweils eine Abweichung der Ist-Abstände der Stirnfläche eines radial außen liegenden Bereichs der Statorhälften von den Stirnflächen der Statormagnete bestimmt. Alternativ kann auch eine Abweichung von den Stirnflächen eines radial innen liegenden Bereichs des Statorrings oder eines Lageraußenrings oder Lagerinnenrings des Statorrings ermittelt werden. Insbesondere wird hierbei zunächst auch die IST-Dicke des Rotors bestimmt, um dann bei der Ermittlung der richtigen Einstelldicke zwischen den beiden Statorhälften berücksichtigt zu werden.

Auf diese Weise sind sowohl die Statorhälften zum Rotor, d.h. die Statormagnete zu den Rotormagneten ausgerichtet, als auch die Statorhälften, bzw. die Statorringe zueinander ausgerichtet.

Auch Parallelitätsfehler oder Winkelabweichungen können ausgewertet werden und verringert/korrigiert werden. Dazu muss an mehreren auf dem Umfang verteilten Stellen gemessen werden und über den Umfang verteilt müssen Abstandselemente unterschiedlicher Dicke, d.h. mit unterschiedlichen Einstelldicken, angeordnet werden. Es kann hierfür auch eine sogenannte "Parallelschaltung" der Abstandelemente verwendet, um auf unterschiedlichen Stellen des Umfangs unterschiedliche Einstelldicken zu realisieren um beispielsweise Winkelfehler, Parallelitätsfehler usw. reduzieren zu können. Hierbei ändert sich nicht (nur) die Dicke der Abstandselemente, sondern (auch) ihre Anzahl, mit der sie an einer Position übereinandergelegt werden.

Um die Position zweier Unterbaugruppen der elektrischen Maschinenanordnung exakt relativ zueinander einstellen, können auch mehrere Einstellelemente kombiniert werden. Dabei können mehrere Einstellelemente aufeinandergestapelt werden, so dass das benötigte Einstellmaß durch die Summe der Einstellelementedicken gebildet wird. Zusätzlich oder alternativ können auch mehrere Einstellelemente nebeneinander auf den Kontaktflächen der Unterbaugruppen verteilt werden oder auf dem Umfang der Unterbaugruppen verteilt angeordnet werden. Mehrere Einstellelemente gleicher Dicke oder mehrere Einstellelementestapel gleicher Dicke parallel anzuordnen erhöht zwar die Anzahl der benötigen Elemente, ermöglicht aber gleichzeitig auch kleinere und/oder einfacher geformte Einstellelemente zu verwenden. Es wird dadurch auch erleichtert baugleiche Einstellelemente an verschieden Stellen der elektrischen Maschinenanordnung zu verwenden, obwohl die Kontaktflächen der Unterbaugruppen an der jeweiligen Verbindungsstelle anders aussehen.

Es wird weiter ein Antriebsstrang mit einer elektrischen Maschinenanordnung sowie ein Kraftfahrzeug mit so einem Antriebsstrang vorgeschlagen.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können.

Es zeigen:

Figur 1      einen Axialflussmotor in I-Anordnung zur Veranschaulichung des technischen Umfelds, in einem Axialschnitt in schematischer Darstellung,

Figur 2      eine erste Maschinenanordnung mit Abstandselementen,

Figur 3      eine zweite Maschinenanordnung mit Abstandselementen,

Figur 4      eine Darstellung der Stirnflächen zur Veranschaulichung eines Montageverfahrens,

Figur 5      eine Darstellung der Stirnflächen zur Veranschaulichung es weiteren Montageverfahrens, und

Figur 6      eine Darstellung von ihrer Dicke in Umfangsrichtung variierter Abstandselementen.

Figur 7      eine Darstellung von in Umfangsrichtung in ihrer Dicke variierter Abstandselemente.

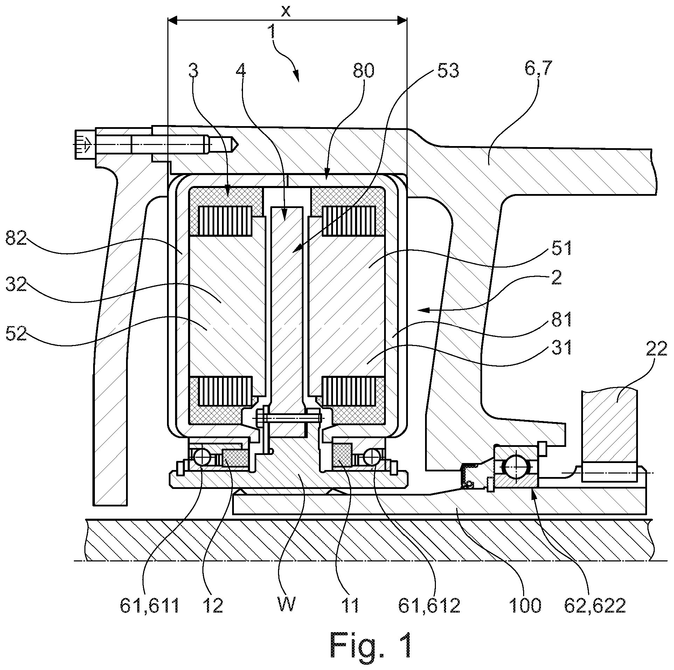

Figur 1 zeigt eine elektrische Maschinenanordnung 1, umfassend eine elektrische Axialflussmaschine 2, die auch als Axialflussmotor bezeichnet werden kann in I-Anordnung für den Antrieb eines elektrisch antreibbaren Kraftfahrzeugs, eine den Stator 3 abstützende Komponente 6 in Form eines Gehäuses 7 sowie ein in drehfestem Kontakt mit einem Rotor 4 stehendes, als Abtriebswelle ausgebildetes Abtriebselement 100. Die Axialflussmaschine 2 weist einen Stator 3 und einem Rotor 4 auf. Der Rotor 4 ist dabei über zwei axial zueinander beabstandete Lagerstellen 611, 612 drehbar gelagert innerhalb der elektrischen Maschinenanordnung 1 angeordnet. Zusätzlich ist das als Abtriebswelle ausgebildete Abtriebselement 100 über eine weitere Lagerstelle 622 in der Seitenwand eines Gehäuses 7 der Axialflussmaschine 2 gelagert abgestützt. Die Lagerstellen 611, 612 stützen den Rotor 4 sowohl axial, als auch radial über eine Rotorwelle W am Statorring 80, bzw. den beiden Statorhälften 31 und 32 ab. Der Statorring 80 ist aus einem ersten Statorring 81 und einem zweiten Statorring 82 aufgebaut ist. Die beiden Statorringe 81,82 sind radial außerhalb des Rotors 4 und ihn radial überdeckend miteinander gekoppelt. Auch der Stator 3 ist aus zwei Statorhälften 31,32 links und rechts vom Rotor 4 aufgebaut. Sowohl zwischen den ersten Statormagneten 51 und den Rotormagnet 53, als auch zwischen den zweiten Statormagneten 52 und den Rotormagneten 53 befinden sich Luftspalte 41. Die Breite dieser Luftspalte 41 sind verantwortlich für die Effizienz der Maschinenanordnung 1 und erforderlich für ihre Funktionstüchtigkeit. Sie sind abhängig von den Toleranzen der axialen Breiten, bzw. Dicken der Baugruppen erste Statorhälfte 31, zweite Statorhälfte 32 und Rotor 4 bzw. deren Magneten 51,52,53 sowie deren axialen Ausrichtung zueinander.

Gut zu erkennen ist, dass in einem räumlichen Bereich in Form eines Ringspaltes in radialer Richtung zwischen der Rotorwelle W und dem Stator 3 und in axialer Richtung innerhalb der axialen Erstreckung X des Stators 3 ein Wellenerdungselement 11 und ein Rotorlagesensor 12 angeordnet sind. Die Rotorwelle W ist über eine Innenverzahnung mit einer Außenverzahnung der Abtriebswelle 100 verbunden, wobei die Abtriebswelle 100 außerhalb des Gehäuses 7 über eine weitere Außenverzahnung mit einem Zahnrad einer Getriebestufe 22 kämmt.

Auf der linken Seite der Axialflussmaschine 2 ist eine als Wälzlager ausgebildete Lagerstelle 611 mit integriertem Rotorlagesensor 12 abgebildet. Der Lagerinnenring 110 und der Lageraußenring 120 weisen beide neben der Laufbahn für die Wälzkörper eine Anschlusskontur auf, an der der Rotorlagesensor 12 befestigt ist. In der Figur 1 ist der Bereich zwischen dem Innenring 110 und dem Außenring 120, der für den Rotorlagesensor 12 zur Verfügung steht, als gekreuzt schraffierte Querschnittsfläche dargestellt. Teile des Rotorlagesensors 12 sind mit dem Lagerinnenring 110 und andere Teile des Rotorlagesensors 12 mit dem Lageraußenring 120 verbunden. Der Rotorlagesensor 12 erfasst die Winkelstellung der Sensorteile, die über den Lageraußenring 120 drehfest mit den Elektromagneten des Stators 3 verbunden sind, relativ zu den Teilen des Rotorlagesensors 12, die über den Lagerinnenring drehfest mit den Permanentmagneten des Rotors 4 verbunden sind. Über den Rotorlagesensor 12 kann somit ständig die Winkelstellung der Permanentmagnete relativ zu den Elektromagneten erfasst werden. Diese Information ist erforderlich für die korrekte Ansteuerung der Elektromagnete der Axialflussmaschine 2.

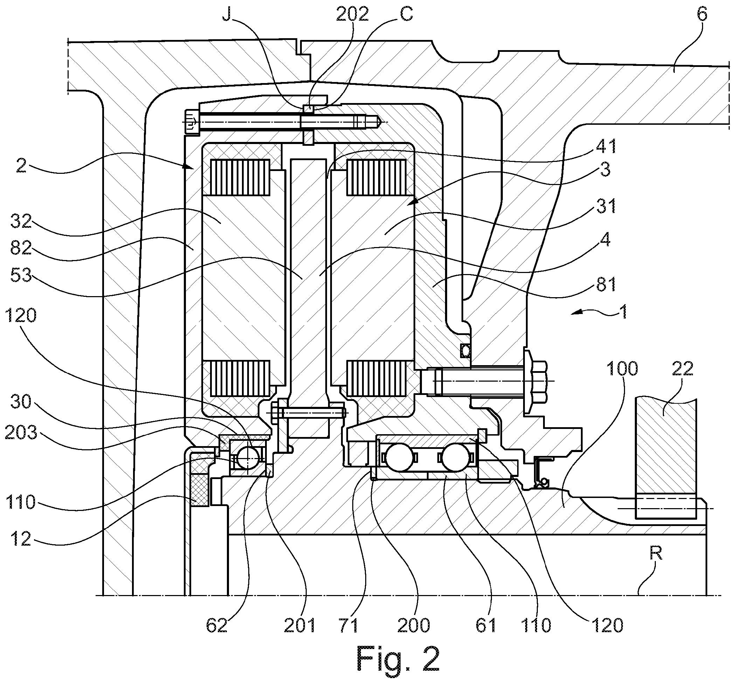

Figur 2 zeigt eine elektrische Maschinenanordnung 1 mit Einstellscheiben 200,201 und 202 und einem radialen Bereich 203 einer Hülse 30 als Abstandselemente. Die Hülse 30 erstreckt sich in axialer Richtung und weist dabei einen radial verlaufenden radialen Bereich 203 mit einer vorgegebenen axialen Dicke auf.

Hier wurde der Abstand und die axiale Positionierung der Statorhälften 31 und 32 zum Rotor 4 zunächst über axial innen liegende Einstellscheiben 200,201,202 realisiert. Axial innen liegend ist hier auf den Rotor 4 bezogen. Als Achse ist hier die Rotationsachse der Abtriebswelle 100 gemeint. Das heißt, die Eistellscheiben 200,201,202 liegen axial zwischen den beiden Statorringen 81 und 82.

Figur 2 zeigt eine Axialflussmaschine 2 mit Einstellscheiben 200,201,202 als Abstandselemente an mehreren möglichen Positionen des Motorzusammenbaus. Durch die richtige Wahl der Einstellscheibendicke lassen sich Formabweichungen der benachbarten Baugruppen ausgleichen und die exakte axiale Lage der zu den Einstellscheiben 200,201,202 benachbarten Baugruppen relativ zueinander einstellen. Auch wenn es möglich ist eine erkannte Abweichung über mehrere Einstellscheiben auszugleichen, ist es für gewöhnlich vorgesehen, die Abweichungen zweier Baugruppen durch eine gemeinsame Einstellscheibe auszugleichen.

Auf die genaue Funktion und eine detaillierte Bauteilbeschreibung des in Figur 1 gezeigten Axialflussmotors wird nicht weiter eingegangen. Es wird hierzu auf die Offenbarung der nachveröffentlichten DE 10 2020 122 255 A1 verwiesen, deren Offenbarung in Bezug auf den Aufbau des Axialflussmotors eingeschlossen sein soll.

Im Folgenden ist der Ausrichtevorgang bzw. das Montageverfahren des Axialflussmotors in Bezug auf die Luftspalteinstellung beschrieben:
Die in der Figur 2 gezeigte Axialflussmaschine 2 besteht aus drei Hauptbaugruppen, die jeweils separat vormontiert werden und dann anschließend miteinander verbunden werden. Die drei Baugruppen bestehen aus den beiden Statorhälften 31,32 und dem Rotor 4. In einer Axialflussmaschine in I- oder H-Anordnung 2 gibt es mindestens zwei radial verlaufende Luftspalte 41, die sich jeweils zwischen einer Stirnseite des Rotors 4 und einer Stirnseite einer Statorhälfte 31,32 des Stators 3 befinden und von dem magnetischen Feld (vorzugsweise axial) durchströmt werden. Der axiale Abstand zwischen der jeweiligen Rotorseite und der zugehörigen Statorseite, entspricht der Luftspaltbreite und hat erheblichen Einfluss auf die Eigenschaften der Axialflussmaschine 2. Damit die Axialflussmaschine 2 sicher funktioniert und ihre vorgesehenen Eigenschaften aufweist, dürfen die Luftspaltbreiten nur in sehr geringem Maße von den Sollwerten abweichen. Werden die Luftspalte 41 zu klein, besteht die Gefahr, dass der Rotor 4, der sich mit Relativdrehzahl zum Stator 3 dreht, diesen berührt und so Rotor 4 und/oder Stator 3 beschädigt werden. Ist der Luftspalt 41 zu groß, stellt dieser einen zu hohen magnetischen Widerstand da, so dass die Axialflussmaschine 2 ihr gefordertes_Maximaldrehmoment nicht mehr erbringen kann. Sind die beiden Luftspalte 41 unterschiedlich breit, wirken ungleichmäßige Kräfte auf die beiden Seiten des Rotors 4 und des Stators 3, so dass die Motorstruktur vermeidbaren Kräften und Schwingungsanregungen ausgesetzt ist. Da schon sehr geringe Abweichungen der Luftspaltbereiten großen Einfluss auf die Axialflussmaschine 2 haben, ist es sinnvoll diese exakt einzustellen.

Bei der Montage der in Fig. 2 gezeigten Axialflussmaschine 2 beginnt man sinnvollerwiese mit einer der beiden Statorhälften 31,32, positioniert dann den Rotor 4 axial exakt zu dieser Statorhälfte 31,32 und montiert anschließen die zweite Statorhälfte 32,31, indem man diese ebenfalls axial exakt zu dem Rotor 4 ausrichtet. Der axiale Abstand, der beiden Statorhälften 31,32 zueinander, ergibt sich aus den beiden Ausrichtvorgängen durch die jede der beiden Statorhälften 31,32 zum Rotor 4 ausgerichtet wird. Daher muss an der Verbindungsstelle der beiden Statorhälften 31,32 ebenfalls eine axiale Längenanpassung möglich sein, um die exakte Ausrichtung der beiden Statorhälften 31,32 zum Rotor 4 zu ermöglichen und anschließend eine feste und dauerhafte Verbindung der Statorhälften 31,32 zu gewährleisten.

Von welcher Motorseite man beginnt, die Hauptbaugruppen auszurichten und miteinander zu verbinden ist prinzipiell egal. Das hier beschriebenen Mess-, Ausrichte- und Montagekonzept funktioniert von beiden Seiten aus. Im Folgenden wird mit der ersten Statorhälfte 31 auf der Abtriebseite der Axialflussmaschine 2 (in Fig. 2 rechts dargestellt) begonnen. Der notwendige Ablauf von der anderen Seite ist sinngemäß darauf übertragbar.

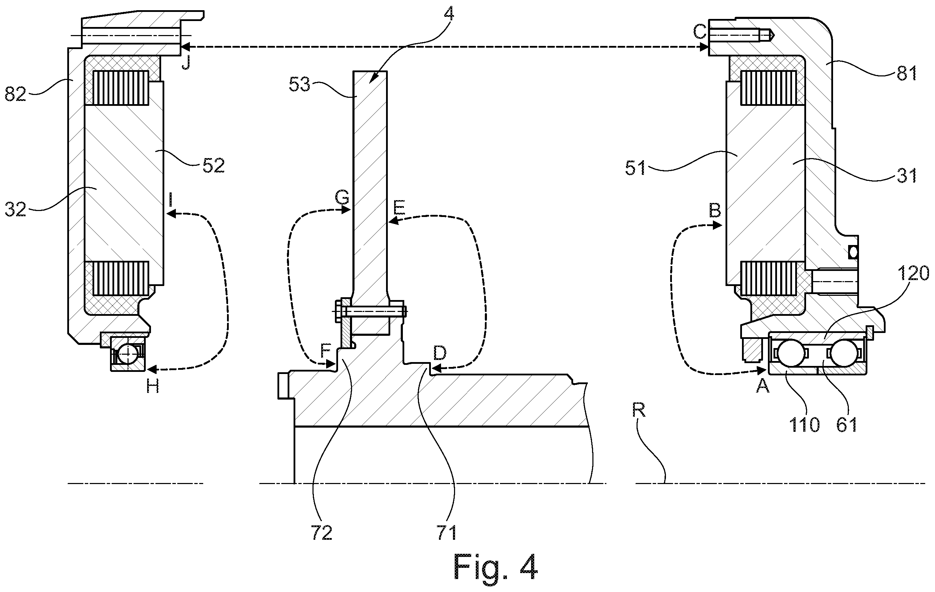

Der Montagevorgang ist in Fig. 4 in Verbindung mit Fig. 2 veranschaulicht:
Zunächst werden die beiden rechten Baugruppen Rotor 4 und erste Statorhälfte 31 zueinander ausgerichtet. Zur Baugruppe des Rotors 4 wird hier die Rotorwelle W mit einer ersten Wellenschulter 71 zugezählt. Zur Baugruppe der ersten Statorhälfte 31 wird die Lagerstelle 61 mitgerechnet. An der abtriebseitigen ersten Statorhälfte 31 wird das axiale Maß, d.h. der Ist-Abstand $AB_{ist}$ zwischen der Stirnseite A des Lagerinnenringes 110, der später mit der Rotorwelle W verbunden wird (Fläche A) und der Statoroberfläche B, hinter der sich die ersten Statormagnete 51 befinden (Fläche B) gemessen, mit einem vorgegeben Soll-Abstand $AB_{soll}$ verglichen und die Abweichung $\Delta AB$ bestimmt. Anschließend wird der Ist-Abstand $ED_{ist}$ zwischen der Wellenschulter 71 (Fläche D) der Rotorwelle W, an der sich später die Lagerkräfte axial abstützen, und der Rotorfläche E (Fläche E), hinter der sich die Rotormagnete 53 befinden gemessen. Die Rotorfläche E befindet sich hierbei auf der rechten Seite des Rotors 4, welche der ersten Statorhälfte 31 zugewandt ist. Der Ist-Abstand $ED_{ist}$ wird mit einem Soll-Abstand $ED_{soll}$ verglichen und die Abweichung $\Delta ED$ bestimmt. Durch die Abweichungen $\Delta AB$, $\Delta ED$ der beiden Ist-Abstände $AB_{ist}$, $ED_{ist}$ von den jeweiligen Soll-Abstände $AB_{soll}$, $ED_{soll}$, kann dann die benötigte Breite, bzw. Dicke der Einstellscheibe 200 berechnet werden, die zwischen der Stirnseite A des Lagerinnenrings 110 und die Wellenschulter D der Rotorwelle W gelegt werden muss, um die jeweiligen Abweichungen ∆AB, ∆ED auszugleichen (siehe Figur 2). Hierzu können die Abweichungen ∆AB, ∆ED bspw. addiert werden und zu der Normaldicke einer Einstellscheibe 200 addiert werden. Die Einstellscheibe 200 mit einer Normaldicke ist genau für den Fall vorgesehen, dass die Abweichungen ∆AB, ∆ED in der Summe gerade Null ergeben. Hierbei sind die Vorzeichen der Abweichungen ∆AB, ∆ED zu beachten. Je nachdem, wie die Abweichungen ∆AB, ∆ED am Rotor 4 und an der Statorhälfte 31 ausfallen, wird eine Einstellscheibe gewählt, die dicker oder dünner ist, als das Normaldicke [Einstellscheibendicke = Normaldicke + $(AB_{ist} - AB_{soll}) + (ED_{soll} - ED_{ist})$ ]. Die gewählte Einstellscheibe 200 wird dann vor der Wellenschulter D oder der Stirnseite A des Lagerrings 110 angeordnet, so dass sie zwischen Wellenschulter D und Stirnseite A liegt. Anschließend wird die Rotorwelle W dieses Ausführungsbeispiels in die Lagerstelle 61 der abtriebsseitigen ersten Statorhälfte 31 gesteckt und durch eine Wellenmutter 24 mit der Lagerstelle 61 verschraubt.

Statt die Einstellscheibe 200 zwischen dem Lagerinnenring 110 und der Schulter 71 vorzusehen, kann auch eine entsprechend dimensionierte Einstellscheibe zwischen der Stirnfläche des Lageraußenrings 120 und einem Absatz des ersten Statorrings 81 vorgesehen sein. Hierbei ist die Zuordnung der Einstellscheibe 200 zur Positionierung des Statorrings 81 axial auf den Rotor 4 hin, oder von ihm weg bei der Bestimmung der notwendigen Dicke der Einstellscheibe 200 zu beachten, die hier zu einer Vorzeichenänderung bei dem auf die Normaldicke anzuwendenden Korrekturfaktur führt. In diesem Fall führt eine Dickenveränderung der Einstellscheibe 200, die am Lageraußenring 120 zwischen Lageraußenring 120 und Statorring 81 angeordnet ist, zu einer von Betrag her gleichen aber mit anderem Vorzeichen versehenen Axialverschiebung zwischen Statorring 81 und Rotor 4, als eine Dickenveränderung einer Einstellscheibe 200 auf derselben axialen Seite des Lagers vor dem Lagerinnenring 110. Mit anderen Worten, wenn mit dem oben beschriebenen Verfahren ermittelt wurde, dass am Lagerinnenring 110 eine Einstellescheibe 200 benötigt wird, die um das Maß ∆X dünner ist als die Normaldicke, so muss, wenn dieselbe Korrektur durch eine Einstellescheibe 200 auf derselben Axialseite des Lagers am Lageraußenring 120 erfolgen soll, dort eine Einstellscheibe 200 verwendet werden, die um das Maß ∆X dicker ist als die Normaldicke dieser Einstellscheibe 200. Statt einer Einstellscheibe 200 kann auch eine Hülse 30 am Lagerinnenring 110 oder Lageraußenring 120 vorgesehen sein. Die Einstellscheibe 200 würde dann durch einen radialen Bereich 203 der Hülse 30 mit gleicher axialer Dicke ersetzt werden. Wenn Lagerinnenring oder Lageraußenring axial beidseitig fixiert sind, hat die Dicke der an der Stirnseite des Lagerringes eingebauten Einstellscheibe (oder eines Einstellelements anderer Art) auch Auswirkungen auf die axiale Fixierung des Lagers auf der gegenüberliegenden Seite des Lagerringes. Die axiale Fixierung des Lagers sollte auf der dem Einstellelement abgewandten Seite daher beispielsweise durch ein Element erfolgt, dass sich an die tatsächlichen Lager der Lagerringstirnfläche anpassen kann. Alternativ dazu kann der Lagerring axial auch zwischen zwei Einstellelementen angeordnet werden, so dass es möglich ist, den Lagerring durch die Variation der Einstellelementedicken axial zu verschieben, die axiale Gesamtdicke aus Lagerring und den beiden benachbarten Einstellelemente aber konstant zu halten (um den Betrag um den das eine Element dünner wird, wird das andere Element dicker). Dadurch kann die axiale Fixierung des Lagerringes auch durch Bauteile erfolgen, die sich nicht so einfach an die tatsächliche Lage des Lagerringes anpassen lassen, wie beispielsweise Wellensicherungsringe, Nuten, Bauteilschultern oder Konturen von Nachbarbauteilen.

Danach wird auf gleiche Weise die Dicke für eine Einstellscheibe 201 (siehe Fig. 2) berechnet, die zwischen der zweiten Statorhälfte 32 und dem Rotor 4 vorgesehen ist. Zunächst wird an der dem Abtrieb abgewandten zweiten Statorhälfte 32 der Abstand $IH_{ist}$ zwischen der Stirnseite H des Lagerinnenrings 110 der Lagerstelle 62 (Fläche H) und der Statoroberfläche I, hinter der sich die Statormagnete 52 befinden (Fläche I) gemessen und mit dem Sollmaß $IH_{soll}$ verglichen und so die Abweichung ∆IH bestimmt. Die Stirnfläche I ist dabei dem Rotor 4 zugewandt. Anschließend wird auf gleiche Weise der Abstand $GF_{ist}$ zwischen der zweiten Schulter 72, der Wellenschulter F (Fläche F), an der sich später die Lagerkräfte axial abstützen, und der Rotorfläche G (Fläche G), hinter der sich die Rotormagnete 53 befinden gemessen, mit seinem Sollmaß $GF_{soll}$ verglichen und die Abweichung ∆IGF bestimmt. Auch auf dieser Seite der Axialflussmaschine 2 wird durch die Abweichungen ∆GF, ∆IH der beiden Ist-Abstände $GF_{ist}$, $IH_{ist}$ von den jeweiligen Soll-Abständen $GF_{soll}$, $IH_{soll}$ wie oben beschrieben die nowendige Dicke für die Einstellscheibe 201 ermittelt. Die richtige Einstellscheibe 201 kann dann auf die Rotorwelle W aufgeschoben werden.

Auch hier kann die Einstellschiebe alternativ zwischen einem Vorsprung des zweiten Statorrings 82 und dem Außenlagerring 120 vorgesehen sein oder alternativ auch durch den radialen Bereich 203 einer Hülse 30 ersetzt sein (Fig. 2).

Bevor die zweite Statorhälfte 32 final montiert wird, wird noch die notwendige Dicke einer Einstellscheibe 202 zwischen den Statorhälften 31,32 ermittelt. Die Einstellscheibe 202 ist dabei zwischen axialen Stirnflächen J und C vorgesehen, die die Kontaktstelle der axial verlaufenden, radial außen liegenden Abschnitte der ersten und zweiten Statorringe 81 und 82 bilden.

Dazu gibt es drei Möglichkeiten. Die erste Möglichkeit besteht darin, die zweite Statorhälfte 32 auf die bereits mit den richtigen Einstellscheiben 200,201 versehenen Rotorwelle W aufzuschieben und den Abstand $JC_{ist}$ zwischen den beiden Flächen J und C zu messen, anschließend die zweite Statorhälfte 32 wieder zu entfernen und eine Einstellscheibe 202, deren Dicke dem

gemessen Ist-Abstand $JC_{ist}$ entspricht, bei der erneuten Montage der Statorhälfte zwischen die Flächen J und C zu positionieren.

Die zweite, bevorzugte Möglichkeit besteht darin die Ist-Abstände $AC_{ist}$, $DF_{ist}$, $HJ_{ist}$ der oben beschriebenen Stirnflächen A,C,D,F,H,J zu messen, die zuvor festgelegten Dicken der beiden Einstellscheiben 201,202 rechts und links des Rotors 4 zu berücksichtigen und daraus die richtige Dicke für die Einstellscheibe 202 zu ermitteln, die zwischen den beiden Statorhälften 31,32 (Flächen J und C) eingebaut werden muss. Wenn die Einstellscheibe 202 ausgewählt und eingelegt wurde, können die beiden Statorhälften 31,32 des Ausführungsbeispiels miteinander verschraubt werden.

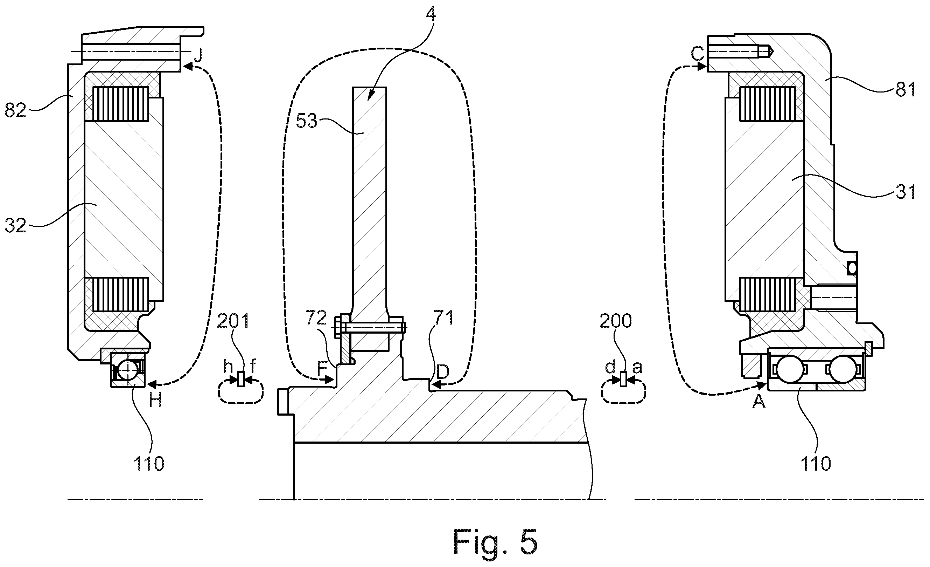

Eine dritte Möglichkeit ist in Fig. 5 dargestellt. Hier werden zunächst Einstellscheiben 200, 201, wie sie oben ermittelt worden eingesetzt, ohne die Baugruppen zusammenzusetzen.

Es werden dann, analog zur Bestimmung der Abweichungen zwischen den Statorhälften 31,32 zum Rotor 4, hier wieder die axialen ist-Abstände $AC_{ist}$, $DF_{ist}$, $HJ_{ist}$ ,$a_{dist}$, $f_{hist}$ jeweils einer Baugruppe vermessen. Insbesonder die ist-Abstände

$a_{dist}$, $f_{hist}$ geben hierbei Auskunft über die tatsächlichen Dicken der Einstellscheiben 200,201. Die Flächen a,d bezeichnen die stirnseitigen Oberflächen der abtriebsseitigen Einstellscheibe 200 und sind den Flächen A (des Innenrings 110) und D (der ersten Schulter 71) zugewandt. Entsprechend sind die Flächen f und h der anderen Einstellscheibe 201 den Flächen F, der zweiten Schulter 72 und H des anderen Innenrings 110 zugewandt.

Diese ist-Abstände $AC_{ist}$, $DF_{ist}$, $HJ_{ist}$ ,$a_{dist}$, $f_{hist}$ werden mit entsprechenden soll-Abständen ($AC_{soll}$, $DF_{soll}$, $HJ_{soll}$, $ad_{soll}$, $fh_{soll}$) verglichen, so dass vorzeichenbehaftete Abweichungen ($\Delta AC$, $\Delta DF$, $\Delta HJ$, $\Delta ad$, $\Delta fh$) ermittelt werden können.

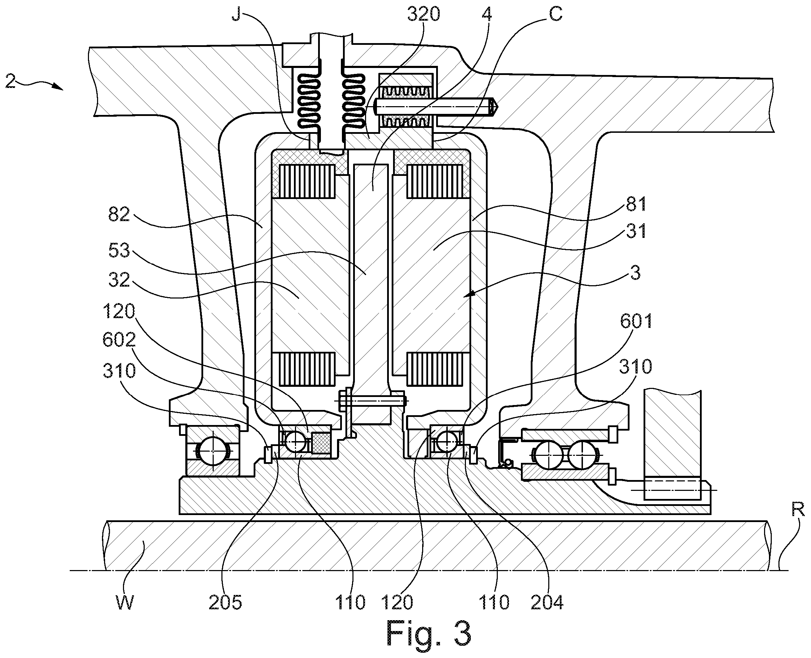

Wenn wenigstens zwei dieser Abweichungen ($\Delta AC$, $\Delta DF$, $\Delta HJ$, $\Delta ad$, $\Delta fh$) bekannt sind, kann eine Aussage über die benötigte Dicke, bzw. die Abweichung der Dicke von der Normaldicke, wenn in Summe keine Abweichungen vorliegen, für die Einstellscheibe 202, bzw. einen Statorverbindungsring 320 (s. Fig. 3) bestimmt werden.

Idealerweise werden alle Abweichungen ($\Delta AC$, $\Delta DF$, $\Delta HJ$, $\Delta ad$, $\Delta fh$) bestimmt. Die Differenz $\Delta CJ$ der Einstellscheibe 202 oder des Statorverbindungsrings 320 von der Normaldicke $CJ_{normal}$ bestimmt sich dann, unter Berücksichtigung der Vorzeichen aus:

$$\Delta CJ = \Delta AC + \Delta DF + \Delta HJ + \Delta ad + \Delta fh.$$

Abschließend wird dann eine Einstellscheibe 202 oder ein Statorverbindungsring 320 mit einer Dicke $CJ_{normal} + \Delta CJ$ ausgewählt und zwischen den beiden Statorhälften 31,32 angeordnet, so dass die Luftspalte 41 zwischen den Statorhälften 31,32 und dem Rotor 4 entsprechend eingestellt werden.

Bei dem Ausführungsbeispiel in Fig. 2 befindet sich am Lageraußenring 120 der links dargestellten Lagerstelle 62 eine Hülse 30, an der sich die Lagerstelle 62 axial abstützt. Diese Hülse 30 weist einen radialen Bereich 203 auf. Es können Hülsen 30 mit radialen Bereichen 203 unterschiedlicher axialer Dicke bereitgestellt sein, welche dann alternativ zu Einstellscheiben 201,202 der gleichen Dicke verwendet werden können. Zwischen der Hülse 30 und dem Rotorlagesensor 12 befindet sich eine weitere Einstellscheibe mit der der exakte axiale Abstand des Rotorlagesensors 12 zur mit Aussparungen versehenen Stirnfläche der Rotorwelle W (Messreferenz) eingestellt werden kann.

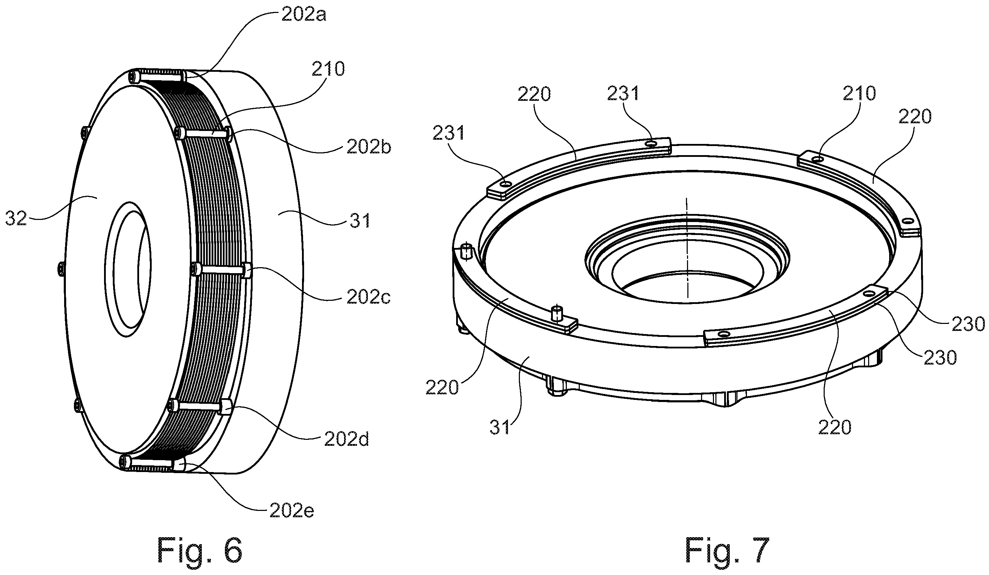

Statt umlaufender ringförmiger Einstellscheiben 200,201,202,204,205 oder Hülsen 30 können auch mehrere auf dem Umfang verteilte Einstellelemente 202a-202e eingesetzt werden, die je nach Toleranzsituation der Nachbarteile in ihrer Dicke variiert werden. Eine entsprechende Darstellung ist beispielhaft in Fig. 6 gezeigt. Hier sind Einstellelemente 202a-202e gezeigt, die in Umfangsrichtung zwischen zwei Statorhälften 31,32 angeordnet sind und hier in Uhrzeigersinn in ihrer Dicke zunehmen.

Fig. 6 zeigt eine isometrische Darstellung des Stators 3, der eine toleranzbedingte Schrägstellung einer der beiden Statorhälfte 31, 32 aufweist. Die beiden Statorhälften 31, 32 weisen gleichmäßig auf deren Umfang verteile Löcher auf und sind hier über acht zwischen ihnen an den Löchern verteilt angeordnete Einstellelemente 202a-202e mit unterschiedlichen Dicken relativ zueinander ausgerichtet und über Schrauben 210 miteinander verbunden. Damit die Schrauben 210 und die Einstellelemente 202a-202e in der Fig. 6 besser erkennbar sind, ist das in der Abbildung links dargestellte Statorgehäuse 32 über eine Hälfte des Umfangs nicht vollständig dargestellt, das heißt das Statorgehäuse 32 ist über etwa 180° des Umfangs mit einem Ausbruch (Bereich der parallelen Schraffurlinien) versehen, wodurch die Schrauben 210 und die Einstellelemente 202a-202e in diesem Bereich freigelegt sind. Die Einstellelemente 202a-202e sind hier als kreisförmige um die Schrauben 210 angeordnete Ringe bzw. Ringscheiben ausgeführt. Um die ebenen Anschraubflächen der beiden Statorhälften 31, 32 schräg zueinander ausrichten zu können, sind die Einstellelemente 202a-202e mit unterschiedlichen Dicken so über den Umfang des Stators 3 angeordnet, dass die Dicken der Einstellelemente 202a-202e von einer Stelle (in der Abbildung oben), an der das Einstellelement 202a mit der geringsten Dicke angebracht ist, über den in dieser Darstellung freigesetzten Umfang der Statorhälften 31, 32 schrittweise zunehmen und ab einer Stelle (in der Abbildung unten), an der das Einstellelement 202e mit der größten Dicke angebracht ist, die Dicken der Einstellelemente 202b-202d entlang des restlichen Umfangs wieder abnehmen. Bei diesen rund ausgebildeten Einstellelementen 202a-202e oder bei Einstellelementen, die durch ihre Kontur am Verdrehen gehindert werden, reicht ein Loch / Bohrung aus, um eine einfache Montage zu gewährleis-ten.

Auf diese Weise könnten auch Toleranzen in Umfangsrichtung ausgeglichen werden. Indem man auf einer Seite des Umfangs dickere Einstellelemente einsetzt als auf der gegenüberliegenden Seite, werden die Stirnflächen der benachbarten Baugruppen, die durch die Einstellelemente relativ zueinander ausgerichtet werden sollen, relativ zueinander geneigt. Dadurch können Geometriefehler wie Ebenheitsfehler, Parallelitätsfehler, Planlauffehler, Winkelfehler und Schrägstellungen in ihrer Wirkung auf die elektrische Maschine reduziert werden. Sollten die Stirnflächen wellig sein oder parzielle Ebenheitsabweichungen aufweisen, können die auf dem unfang verteilten Einstellstücke in ihrer Dicke so abgestimmt werden, dass jedes Einstellstück die für seine individuelle Einbauposition richtige Dicke aufweist. Die Dickenverteilung der Einstellstücke auf dem Umfang muss dazu keinem regelmäßigen Muster folgen oder kontinuierlich verändert werden, es kann sich an den individuellen Verhältnisse jeder einzelnen elektrischen Maschine orientiert werden. Es können alternativ auch umlaufende Einstellscheiben oder Einstellringe verwendet werden, deren Dicke auf dem Umgang gesehen nicht konstant ist.

Sollen nicht nur zwei schräge Flächen in einer definierten Winkellage zueinander ausgerichtet und axial positioniert werden, sondern zusätzlich oder alternativ Umfangswelligkeiten oder sonstige Formfehler einer von einer ebenen Fläche abweichenden Befestigungsfläche kompensiert werden, müssen die Einstellscheibendicken auf dem Umfang keinem regelmäßigen Verlauf aufweisen, sondern können für jede Position einzeln bestimmt und zugewiesen werden.

Es ist generell sinnvoll die Stirnflächen, deren axiale Lagen zueinander gemessen werden müssen, nicht nur an einer Stelle zu erfassen, sondern an mehreren Stellen, um Formabweichungen wie Ebenheitsfehler, Welligkeiten und Schrägstellungen erkennen zu können. Je genauer die Stirnflächen messtechnisch erfasst und je genauer ihre individuelle Form ausgewertet werden kann, umso exakter und zuverlässiger kann die Dicke der anschließend verbauten Einstellelemente ausgewählt werden. Für komplexe Einstellvorgänge mit unterschiedlicher Einstelldicke auf dem Umfang ist eine messtechnische Erfassung der Stirnflächen an vielen auf dem Umfang verteilten Stellen fast unumgänglich.

Während des Messvorgangs kann es sinnvoll sein, die Bauteile oder Baugruppen mit einer axialen Vorlast zu beaufschlagen. Durch diese axiale Kraft können beispielsweise Lagerspiele überwunden oder Anfangswelligkeiten (oder andere Formabweichungen) aus den Kontaktflächen rausgedrückt werden, um genauere, relevantere und/oder reproduzierbarere Messergebnisse zu erhalten. Es ist auch möglich, durch Kräfte die wärend des Messvorgangs auf die Bauteile oder Baugruppen ausgeübt werden, deren Belastungen im Betrieb der elektrischen Maschine zu simulieren oder zumindest teilweise anzunähern, um die Form, die sich im Betrieb durch die Elastizität der Bauteile ergibt, messtechnisch erfassen zu können. Beispielsweise können diese Kräfte während der Messung auch durch die Magnete (Permanentmagnete oder Elektromagnete) der elektrischen Maschine hervorgerufen werden oder von außen während des Messvorgangs mechanisch oder magnetisch auf die zu messenden Teile einwirken.

Die zuvor beschriebenen Mess- und Berechnungsabläufe, mit denen die axialen Abmessungen der Unterbaugruppen erfasst und die benötigte Einstellscheibendicke berechnet wird, lassen sich auch alle nutzen, um neben den Axialtoleranzen auch Winkelfehler und/oder Welligkeiten auszugleichen. Statt für jeden Absatz der Unterbaugruppen 4,31,32, die für die Berechnung der richtigen Einstellelementendicke relevant sind, nur ein axiales Abstandsmaß zu messen oder aus mehreren auf dem Umgang verteilten axialen Messungen einen gemittelten axialen Wert weiter zu nutzen um daraus einen relevanten axialen Abstand zweier Stirnflächen zueinander zu bestimmen, müssen dabei die Form der Stirnflächen oder Befestigungsflächen an vielen Stellen ermittelt und die Ausrichtung dieser Flächen zueinander erfasst werden. Wenn die Form und die Lager 61,62,601,602 der relevanten Flächen jeder Unterbaugruppe 4,31,32 der Axialflussmaschine 2 bekannt sind, lassen sich daraus auch für jede Umfangsposition, an der ein Einstellelement zwischen zwei Unterbaugruppen 4,31,32 eingesetzt werden soll, die für diese Position richtige axiale Einstellelementendicke berechnen.

Fig. 7 zeigt eine vereinfacht dargestellte 3D-Abbildung einer Statorhälfte 31, auf deren Kontaktfläche vier Einstellelementestapel 220 mit je zwei Einstellelementen 230 angeordnet sind. Um die Montage zu erleichtern und ein ungewolltes Verrutschen der Einstellelemente 230 zu verhindern, weisen die länglichen Einstellelemente 230 zwei Löcher 231 auf, mit denen sie auf die Schrauben 210 zur Befestigung der Statorhälfte 31 oder andere Fortsätze aufgesteckt werden können. Bei runden Einstellelementen, wie beispielsweise in Abbildung 6 abgebildet oder bei Einstellelementen, die durch ihre Kontur am Verdrehen gehindert werden, reicht auch eine Öffnung aus, um eine einfache Montage zu gewährleisten.

Werden mehrere Einstellelemente 230 oder Einstellelementestapel 220, auf dem Umfang der Axialflussmaschine 2 angeordnet, ermöglicht dies auch relativ einfach für jede Umfangsposition ein speziell abgestimmtes Korrekturmaß einzustellen. Dadurch können dann zwischen den Unterbaugruppen 4,31,32 nicht nur die Axialpositionen eingestellt werden, indem die Baugruppen 4,31,32 durch die richtige Auswahl einer auf dem Umfang konstanten Einstellscheibendicke parallel aufeinander zubewegt oder voneinander entfernt werden, sondern es können auch toleranzbedingte Schrägstellungen und/ oder Umfangswelligkeiten der Verbindungsflächen ausgeglichen werden, indem die auf dem Umfang zwischen den Unterbaugruppen 4,31,32 verteilten Einstellelemente unterschiedliche Dicken aufweisen.

Die Fig. 3 zeigt ein weiteres Ausführungsbeispiel der Erfindung, bei dem Einstellscheiben 204,205 jeweils auf der dem Rotor 4 abgewandten Seite von Lagerstellen 601,602 angeordnet sind. Die Einstellscheiben 204,205 befinden sich dort zwischen den Lagerinnenringen 110 und Wellensicherungsringen 310. Der Längenausgleich zwischen den beiden Statorhälften 31,32 erfolgt bei diesem Ausführungsbeispiel durch unterschiedlich breite Statorverbindungsringe 320 zwischen Stirnflächen C und J, die auch die Abstützung des Stators 3 übernehmen und Versorgungselemente tragen.

Die in dieser Erfindungsmeldung benutzten Begriffe "radial", "axial", "tangential" und "Umfangsrichtung" beziehen sich immer auf die Rotationsachse R der Axialflussmaschine 2.

## Bezugszeichenliste

1 Elektrische Maschinenanordnung

2 Axialflussmaschine

3 Stator

31 Widerlager

4 Rotor

41 Widerlager

6 (den Stator) abstützende Komponente

7 Gehäuse

11 Wellenerdungsring

12 Rotorlagesensor

22 Getriebestufe

24 Wellenmutter

30 Hülse

31 erste Statorhälfte

32 zweite Statorhälfte

41 Luftspalt

51 erste Statormagnete

52 zweite Statormagnete

53 Rotormagnete

61 Lagerstelle (zwischen Rotor und Stator)

611 erste Lagerstelle

612 zweite Lagerstelle

62 Lagerstelle (zwischen Rotor und Gehäuse)

621 erste Lagerstelle

622 dritte Lagerstelle

71 erste Schulter

72 zweite Schulter

80 Statorring

81 erster Statorring

82 zweiter Statorring

100 Abtriebselement

110 Lagerinnenring

120 Lageraußenring

200 erste Einstellscheibe

201 zweite Einstellscheibe

202 dritte Einstellscheibe

202a-202e Einstellscheibe

203 radialer Bereich

204,205 Einstellscheibe

210 Schraube

220 Einstellelementestapel

230 Einstellelement

231 Loch

310 Wellensicherungsring

320 Statorverbindungsring

X axiale Erstreckung (des Stators)

W Rotorwelle

R Rotationsachse

**Patentansprüche**

1. Elektrische Maschinenanordnung (1), die aufweist:

    eine elektrische Axialflussmaschine (2), vorzugsweise für den Antrieb eines elektrisch antreibbaren Kraftfahrzeugs, mit einem Stator (3) und mit einem Rotor (4), wobei
    der Rotor (4) über eine erste Lagerstelle (61,601) und eine zweite Lagerstelle (62,602) drehbar gelagert innerhalb der elektrischen Maschinenanordnung (1) angeordnet ist,
    der Stator (3) eine erste und eine zweite Statorhälfte (31,32) aufweist, welche auf jeweils unterschiedlichen axialen Seiten axial von dem Rotor (4) durch einen Luftspalt (41) beabstandet sind, und
    ein Abstandselement (200,201,202,203,204,205,320) zur axialen Ausrichtung wenigstens zweier der Baugruppen: erste Statorhälfte (31), zweite Statorhälfte (32) und Rotor (4) zueinander vorhanden ist,
    die erste Statorhälfte (31) über die erste Lagerstelle (61,601) und die zweite Statorhälfte (32) über zweite die Lagerstelle (62,602) mit einer Rotorwelle (100) gekoppelt ist, der Rotor (4) in drehfestem Kontakt mit der Rotorwelle (100) steht und die axiale Ausrichtung der ersten Statorhälfte (31) und/oder zweiten Statorhälfte (32) zum Rotor (4) mittels des Abstandselements (200,201,203,204,205) festgelegt ist,
    **dadurch gekennzeichnet, dass**
    die erste Lagerstelle (61,601) und die zweite Lagerstelle (62,602) den Rotor (4) sowohl axial als auch radial über die Rotorwelle (100) an der ersten Statorhälfte (31) und der zweiten Statorhälfte (32) abstützen.

2. Elektrische Maschinenanordnung (1) nach Anspruch 1, **dadurch gekennzeichnet, dass** das Abstandselement (200,201,203,204,205) axial zwischen der einen Lagerstelle (61,62,601,602) und dem Rotor (4) oder axial der wenigstens einen Lagerstelle (61,62,601,602) und einer der zwei Statorhälften (31,32) angeordnet ist.

3. Elektrische Maschinenanordnung (1) nach Anspruch 2, **dadurch gekennzeichnet, dass** das Abstandselement eine Einstellscheibe (200,201,204,205) ist, welche an einer axialen Stirnseite eines Lagerinnenrings (110) oder Lageraußenrings (120) einer der Lagerstellen (61,62,601,602) angeordnet ist.

4. Elektrische Maschinenanordnung (1) nach Anspruch 2, **dadurch gekennzeichnet, dass** das Abstandselement ein radialer Bereich (203) einer Hülse (30) ist.

5. Elektrische Maschinenanordnung (1) nach einem der Ansprüche 1 bis 4, **dadurch gekennzeichnet, dass** die erste Statorhälfte (31) axial relativ zu der zweiten Statorhälfte (32) mittels eines Abstandselements (202,320) ausgerichtet wird, und
das Abstandselement (202,320) axial zwischen den beiden Statorhälften (31,32) und jeweils axial an Stirnflächen (C,J) dieser beiden Statorhälften (31,32) angeordnet ist und vorzugsweise radial außerhalb des Rotors (4) angeordnet ist.

6. Montageverfahren zum axialen Ausrichten von Baugruppen (4,31,32), in einer elektrischen Maschinenanordnung (1) nach einem der Ansprüche 1 bis 5, zueinander, wobei

    für zwei Baugruppen (4,31,32) jeweils zwei Stirnflächen (A,B,C,D,E,F,G,H) ausgewählt werden,
    für diese zwei Stirnflächen (A,B,C,D,E,F,G,H) axiale Ist-Abstände ($AB_{ist}$, $ED_{ist}$, $GF_{ist}$, $IH_{ist}$) zueinander bestimmt werden,
    die so bestimmten Ist-Abstände ($AB_{ist}$, $ED_{ist}$, $GF_{ist}$, $IH_{ist}$) mit vorgegebenen Soll-Abständen ($AB_{soll}$, $ED_{soll}$, $GF_{soll}$, $IH_{soll}$) verglichen werden, wenigstens zwei Abweichungen ($\Delta AB$, $\Delta ED$, $\Delta GF$, $\Delta IH$) der Ist-Abstände ($AB_{ist}$, $ED_{ist}$, $GF_{ist}$, $IH_{ist}$) von diesen Soll-Abständen ($AB_{soll}$, $ED_{soll}$, $GF_{soll}$, $IH_{soll}$) für die zwei Baugruppen (4,31,32) ermittelt werden, und
    ein Abstandselement (200,201,202,203,204,205,320) vorgegebener Dicke in Abhängigkeit von den beiden Abweichungen ($\Delta AB$, $\Delta ED$, $\Delta GF$, $\Delta IH$, $\Delta CJ$) ausgewählt wird und zur Ausrichtung der beiden Baugruppen (4,31,32) zueinander verwendet wird.

7. Montageverfahren nach Anspruch 6, **dadurch gekennzeichnet, dass** beide Stirnflächen (A,B,C,D,E,F,G,H,I,J) jeweils genau einer Baugruppe aus der Menge, erste Statorhälfte (31), zweite Statorhälfte (32) und Rotor (4) angehören.

8. Montageverfahren nach Anspruch 6 oder 7, **dadurch gekennzeichnet, dass** die Stirnflächen (A,B,C,D,E,F,G,H,I,J) Stirnflächen eines Elements aus der Gruppe Lagerstelle (61,62,601,602), Lagerinnenring (110), Lageraußenring (120), Rotorwelle (100), Statorring (81,82), Rotormagnete und Statormagnete (51,52) sind.

9. Montageverfahren nach einem der Ansprüche 6 bis 8, **dadurch gekennzeichnet, dass** das Abstandselement (200,201,202,203,204,205,320) zwischen zwei axial benachbarten Stirnflächen (A,B,C,D,E,F,G,H,I,J) der beiden Baugruppen (4,31,32) eingesetzt wird, so dass ein Luftspalt (41) zwischen zwei Baugruppen (4,31,32) eingestellt wird.

10. Montageverfahren zum axialen Ausrichten von Baugruppen (4,31,32) in einer elektrischen Maschinenanordnung (1) nach einem der Ansprüche 1 bis 5, zueinander, wobei

für drei Baugruppen (4,31,32) und zwei Abstandselemente (200,201) für jeweils zwei Stirnflächen (A,C,D,F,H,J,a,d,f,h) axiale Ist-Abstände ($AC_{ist}$, $DF_{ist}$, HJist ,$ad_{ist}$, $fh_{ist}$) zueinander bestimmt werden,
die zwei Stirnflächen (A,C,D,F,H,J,a,d,f,h) jeweils einer Baugruppe (4,31,32), bzw. einem Abstandselement (200,201) zugehörig sind,
die so bestimmten Ist-Abstände ($AC_{ist}$, $DF_{ist}$, $HJ_{ist}$ ,$ad_{ist}$, $fh_{ist}$) mit vorgegebenen Soll-Abständen ($AC_{soll}$, $DF_{soll}$, $HJ_{soll}$, $ad_{soll}$, $fh_{soll}$) verglichen werden,
die Abweichungen ($\Delta AC$, $\Delta DF$, $\Delta HJ$, $\Delta ad$, $\Delta fh$) der Ist-Abstände ($AC_{ist}$, $DF_{ist}$, HJist ,$ad_{ist}$, $fh_{ist}$) von diesen Soll-Abständen ($AC_{soll}$, $DF_{soll}$, $HJ_{soll}$, $ad_{soll}$, $fh_{soll}$) für die Baugruppen (4,31,32) und/oder Abstandselemente (200,201,203,204,205) ermittelt werden, und
wenigstens ein Abstandselement (202,320) vorgegebener Dicke in Abhängigkeit von den Abweichungen ($\Delta AC$, $\Delta DF$, $\Delta HJ$, $\Delta ad$, $\Delta fh$) ausgewählt wird und zur Ausrichtung von zwei Statorhälften (31,32) zueinander verwendet wird.

**Claims**

1. An electrical machine arrangement (1), having:

an electrical axial flux machine (2), preferably for driving an electrically powered motor vehicle, having a stator (3) and having a rotor (4), wherein
the rotor (4) is rotatably mounted within the electrical machine arrangement (1) via a first bearing point (61, 601) and a second bearing point (62, 602),
the stator (3) has a first and a second stator half (31, 32), which are axially spaced apart from the rotor (4) on different axial sides by an air gap (41), and
a spacer element (200, 201, 202, 203, 204, 205, 320) is provided for axially orienting at least two of the assemblies: first stator half (31), second stator half (32) and rotor (4) relative to one another,
the first stator half (31) is coupled to a rotor shaft (100) via the first bearing point (61, 601) and the second stator half (32) is coupled to said rotor shaft via the second bearing point (62, 602), the rotor (4) is in rotationally fixed contact with the rotor shaft (100) and the axial orientation of the first stator half (31) and/or second stator half (32) to the rotor (4) is determined by means of the spacer element (200, 201, 203, 204, 205),
**characterised in that**
the first bearing point (61, 601) and the second bearing point (62, 602) support the rotor (4) both axially and radially via the rotor shaft (100) on the first stator half (31) and the second stator half (32).

2. The electrical machine arrangement (1) according to claim 1, **characterised in that** the spacer element (200, 201, 203, 204, 205) is arranged axially between one bearing point (61, 62, 601, 602) and the rotor (4) or axially between at least one bearing point (61, 62, 601, 602) and one of the two stator halves (31, 32).

3. The electrical machine arrangement (1) according to claim 2, **characterised in that** the spacer element is an adjustment disc (200, 201, 204, 205), which is arranged on an axial end face of a bearing inner ring (110) or bearing outer ring (120) of one of the bearing points (61, 62, 601, 602).

4. The electrical machine arrangement (1) according to claim 2, **characterised in that** the spacer element is a radial region (203) of a sleeve (30).

5. The electrical machine arrangement (1) according to any one of claims 1 to 4, **characterised in that** the first stator half (31) is oriented axially relative to the second stator half (32) by means of a spacer element (202, 320), and
the spacer element (202,320) is arranged axially between the two stator halves (31, 32) and axially on end faces (C, J) of these two stator halves (31, 32) and is preferably arranged radially outside the rotor (4).

6. An assembly method for the axial orientation of assemblies (4, 31, 32) in an electrical machine arrangement (1) according to any one of claims 1 to 5 relative to one another, wherein two end faces (A, B, C, D, E, F, G, H) are selected for each of the two assemblies (4, 31, 32), the actual axial distances ($AB_{actual}$, $ED_{actual}$, $GF_{actual}$, $IH_{actual}$) relative to one another between these two end faces (A, B, C, D, E, F, G, H) are determined,

the actual distances ($AB_{actual}$, $ED_{actual}$, $GF_{actual}$, $IH_{actual}$) determined in this way are compared with specified target distances ($AB_{target}$, $ED_{tar-}$

get, GF$_{target}$, IH$_{target}$),
at least two deviations (ΔAB, ΔED, ΔGF, ΔIH) of the actual distances (AB-$_{actual}$, ED$_{actual}$, GF$_{actual}$, IH$_{actual}$) from these target distances (AB$_{target}$, ED$_{target}$, GF$_{target}$, IH$_{target}$) for the two assemblies (4, 31, 32) must be determined, and a spacer element (200, 201, 202, 203, 204, 205, 320) of specified thickness is selected depending on the two deviations (ΔAB, ΔED, ΔGF, ΔIH, ΔCJ) and is used to orient the two assemblies (4, 31, 32) relative to one another.

7. The assembly method according to claim 6, **characterised in that** both end faces (A, B, C, D, E, F, G, H, **I,** J) each belong to exactly one assembly from the set, first stator half (31), second stator half (32) and rotor (4).

8. The assembly method according to claim 6 or 7, **characterised in that** the end faces (A, B, C, D, E, F, G, H, I, J) are end faces of an element from the group bearing point (61, 62, 601, 602), inner bearing ring (110), outer bearing ring (120), rotor shaft (100), stator ring (81, 82), rotor magnets and stator magnets (51, 52).

9. The assembly method according to any one of claims 6 to 8, **characterised in that** the spacer element (200, 201, 202, 203, 204, 205, 320) is inserted between two axially adjacent end faces (A, B, C, D, E, F, G, H, **I,** J) of the two assemblies (4, 31, 32), such that an air gap (41) is established between two assemblies (4, 31, 32).

10. The assembly method for the axial orientation of assemblies (4, 31, 32) in an electrical machine arrangement (1) according to any one of claims 1 to 5 relative to one another, wherein for three assemblies (4, 31, 32) and two spacer elements (200, 201), the actual axial distances (AC$_{actual}$, DF$_{actual}$, HJ$_{actual}$, ad$_{actual}$, fh$_{actual}$) relative to one another between each pair of end faces (A, C, D, F, H, J**,** a, d, f, h) are determined,

the two end faces (A, C, D, F, H, J, a, d, f, h) each belong to an assembly (4, 31, 32) or a spacer element (200, 201),
the actual distances determined in this way (AC$_{actual}$, DF$_{actual}$, HJ$_{actual}$, ad$_{actual}$, fh$_{actual}$) are compared with specified target distances (AC$_{target}$, DF$_{target}$, HJ$_{target}$, ad$_{target}$, fh$_{target}$),
the deviations (ΔAC, ΔDF, ΔHJ, Δad, Δfh) of the actual distances (AC$_{actual}$, DF$_{actual}$, HJ$_{actual}$, ad$_{actual}$, fh$_{actual}$) from these target distances (AC$_{target}$, DF$_{target}$, HJ$_{set}$, ad$_{set}$, fh$_{set}$) for the assemblies (4, 31, 32) and/or spacer elements (200, 201, 203, 204, 205) are determined, and

at least one spacer element (202,320) of specified thickness is selected depending on the deviations (ΔAC, ΔDF, ΔHJ, Δad, Δfh) and is used for orienting two stator halves (31, 32) relative to one another.

## Revendications

1. Agencement de machine électrique (1), qui présente :

une machine à flux axial électrique (2), de préférence destinée à entraîner un véhicule à entraînement électrique, comportant un stator (3) et un rotor (4), dans lequel
le rotor (4) est monté en rotation à l'intérieur de l'agencement de machine électrique (1) par l'intermédiaire d'un premier point d'appui (61, 601) et un second point d'appui (62, 602),
le stator (3) présente une première et une seconde moitié de stator (31, 32) qui sont espacées axialement du rotor (4) de côtés axiaux respectivement différents par un entrefer (41), et un élément d'espacement (200, 201, 202, 203, 204, 205, 320) est présent pour l'alignement axial les uns par rapport aux autres d'au moins deux des ensembles : première moitié de stator (31), seconde moitié de stator (32) et rotor (4), la première moitié de stator (31) est couplée à un arbre de rotor (100) par l'intermédiaire du premier point d'appui (61, 601) et la seconde moitié du stator (32) par l'intermédiaire du second point d'appui (62, 602), le rotor (4) est en contact solidaire en rotation avec l'arbre de rotor (100) et l'alignement axial de la première moitié de stator (31) et/ou de la seconde moitié du stator (32) par rapport au rotor (4) est constaté au moyen de l'élément d'espacement (200, 201, 203, 204, 205),
**caractérisé en ce que**
le premier point d'appui (61, 601) et le second point d'appui (62, 602) supportent le rotor (4) tant axialement que radialement par l'intermédiaire de l'arbre de rotor (100) sur la première moitié de stator (31) et la seconde moitié de stator (32).

2. Agencement de machine électrique (1) selon la revendication 1, **caractérisé en ce que** l'élément d'espacement (200, 201, 203, 204, 205) est agencé axialement entre le point d'appui (61, 62, 601, 602) et le rotor (4) ou axialement entre l'au moins un point d'appui (61, 62, 601, 602) et l'une des deux moitiés de stator (31, 32).

3. Agencement de machine électrique (1) selon la revendication 2, **caractérisé en ce que** l'élément d'espacement est un disque de réglage (200, 201, 204, 205) qui est agencé sur un côté frontal axial d'une bague intérieure (110) ou d'une bague extérieure (120) de l'un des points d'appui (61, 62, 601, 602).

**4.** Agencement de machine électrique (1) selon la revendication 2, **caractérisé en ce que** l'élément d'espacement est une zone radiale (203) d'un manchon (30).

**5.** Agencement de machine électrique (1) selon l'une des revendications 1 à 4, **caractérisé en ce que** la première moitié de stator (31) est alignée axialement par rapport à la seconde moitié de stator (32) au moyen d'un élément d'espacement (202, 320), et l'élément d'espacement (202, 320) est agencé axialement entre les deux moitiés de stator (31, 32) et axialement sur des côtés frontaux (C, J) de ces deux moitiés de stator (31, 32) et est de préférence agencé radialement à l'extérieur du rotor (4).

**6.** Procédé d'assemblage pour l'alignement axial d'ensembles (4, 31, 32) dans un agencement de machine électrique (1) selon l'une des revendications 1 à 5, les uns par rapport aux autres, dans lequel

pour deux ensembles (4, 31, 32), deux côtés frontaux (A, B, C, D, E, F, G, H) sont respectivement sélectionnés,
pour ces deux côtés frontaux (A, B, C, D, E, F, G, H), des distances réelles ($AB_{ist}$, $ED_{ist}$, $GF_{ist}$, $IH_{ist}$) axiales entre eux sont déterminées,
les distances réelles ($AB_{is}$, $ED_{is}$, $GF_{is}$, $IH_{is}$) ainsi déterminées sont comparées à des distances théoriques ($AB_{soll}$, $ED_{soll}$, $GF_{soll}$, $IH_{soll}$) prédéfinies,
au moins deux écarts ($\Delta AB$, $\Delta ED$, $\Delta GF$, $\Delta IH$) des distances réelles ($AB_{ist}$, $ED_{ist}$, $GF_{ist}$, $IH_{ist}$) par rapport à ces distances théoriques ($AB_{soll}$, $ED_{soll}$, $GF_{soll}$, $IH_{soll}$) sont établis pour les deux ensembles (4, 31, 32), et
un élément d'espacement (200, 201, 202, 203, 204, 205, 320) d'épaisseur prédéfinie est sélectionné en fonction des deux écarts ($\Delta AB$, $\Delta ED$, $\Delta GF$, $\Delta IH$, $\Delta CJ$) et est utilisé pour aligner les deux ensembles (4, 31, 32) l'un par rapport à l'autre.

**7.** Procédé d'assemblage selon la revendication 6, **caractérisé en ce que** les deux côtés frontaux (A, B, C, D, E, F, G, H, I, J) appartiennent respectivement à exactement un ensemble parmi la première moitié de stator (31), la seconde moitié de stator (32) et le rotor (4).

**8.** Procédé d'assemblage selon la revendication 6 ou 7, **caractérisé en ce que** les côtés frontaux (A, B, C, D, E, F, G, H, I, J) sont des côtés frontaux d'un élément dans le groupe constitué du point d'appui (61, 62, 601, 602), de la bague intérieure (110), de la bague extérieure (120), de l'arbre de rotor (100), de la bague de stator (81, 82), d'aimants de rotor et d'aimants de stator (51, 52).

**9.** Procédé d'assemblage selon l'une des revendications 6 à 8, **caractérisé en ce que** l'élément d'espacement (200, 201, 202, 203, 204, 205, 320) est inséré entre deux côtés frontaux (A, B, C, D, E, F, G, H, I, J) axialement adjacents des deux ensembles (4, 31, 32) de sorte qu'un entrefer (41) soit créé entre les deux ensembles (4, 31, 32).

**10.** Procédé d'assemblage pour l'alignement axial d'ensembles (4, 31, 32), dans un agencement de machine électrique (1) selon l'une des revendications 1 à 5, les uns par rapport aux autres, dans lequel

pour trois ensembles (4, 31, 32) et deux éléments d'espacement (200, 201) pour respectivement deux côtés frontaux (A, C, D, F, H, J, a, d, f, h), des distances réelles ($AC_{ist}$, $DF_{ist}$, $HJ_{ist}$, $ad_{ist}$, $fh_{ist}$) axiales sont déterminées entre eux, les deux côtés frontaux (A, C, D, F, H, J, a, d, f, h) appartiennent respectivement à un ensemble (4, 31, 32) ou à un élément d'espacement (200, 201),
les distances réelles ($AC_{ist}$, $DF_{ist}$, $HJ_{ist}$, $ad_{ist}$, $fh_{ist}$) ainsi déterminées sont comparées à des distances théoriques ($AC_{soll}$, $DF_{soll}$, $HJ_{soll}$, $ad_{soll}$, $fh_{soll}$) prédéfinies,
les écarts ($\Delta AC$, $\Delta DF$, $\Delta HJ$, $\Delta ad$, $\Delta fh$) des distances réelles ($AC_{ist}$, $DF_{ist}$, $HJ_{ist}$, $ad_{ist}$, $fh_{ist}$) par rapport à ces distances théoriques ($AC_{soll}$, $DF_{soll}$, $HJ_{soll}$, $ad_{soll}$, $fh_{soll}$) pour les ensembles (4, 31, 32) et/ou les éléments d'espacement (200, 201, 203, 204, 205) sont déterminés, et
au moins un élément d'espacement (202, 320) d'épaisseur prédéfini est sélectionné en fonction des écarts ($\Delta AC$, $\Delta DF$, $\Delta HJ$, $\Delta ad$, $\Delta fh$) et est utilisé pour aligner deux moitiés de stator (31, 32) l'une par rapport à l'autre.

EP 4 233 160 B1

Fig. 1

Fig. 2

EP 4 233 160 B1

Fig. 3

Fig. 4

Fig. 5

EP 4 233 160 B1

Fig. 6

Fig. 7

EP 4 233 160 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013167670 A2
- FR 3002191 A3
- DE 102020122255 A1